# EUROPEAN PATENT APPLICATION

(11) **EP 2 533 394 A2**
(43) Date of publication of application: **12.12.2012**
(21) Application number: 12171185.7
(22) Date of filing: 07.06.2012
(51) Int. Cl.: H02J 7/02

(54) **Overbed table with wireless power transfer**

(30) Priority: 08.06.2011 US 201113155625
(71) Applicant: Hill-Rom Services, Inc., Batesville, IN 47006-9167 (US)
(72) Inventor: Newkirk, David, C, Lawrenceburg, IN Indiana 47025 (US)
(74) Representative: Findlay, Alice Rosemary

(57) **Abstract**

An item support apparatus receives electrical power wirelessly and stores the electrical power in a power storage device at the item support apparatus. The item support apparatus supplies the electrical power for one or more electronic devices and/or applications, such as charging electronic devices, wireless data transmission, and/or operation of the overbed table.

## Description

The present disclosure relates generally to overbed tables and other item support apparatuses that are commonly positioned adjacent beds or other person support apparatuses, in health care facilities such as hospitals, long-term care facilities, nursing homes, and residences, for the convenience of a caregiver and/or a person occupying the person support apparatus. More specifically, but not exclusively, the present disclosure relates to an overbed table that is equipped with wireless power transfer capabilities.

The present disclosure includes one or more of the following features alone or in any combination.

According to one aspect of this disclosure, an item support apparatus includes a base, a support column extending upwardly from the base, a table surface cantilevered from the support column, a receiver configured to receive electrical power transmitted through a wireless medium by a transmitter that is not in physical contact with the receiver, and a power storage device configured to store electrical power received by the receiver.

The item support apparatus may include power supply circuitry configured to transfer electrical power received by the receiver to the power storage device. The item support apparatus may include a receptacle electrically coupled to the power supply circuitry and configured to supply electrical power to an electronic device connected to the receptacle. The power supply circuitry may be configured to selectively supply at least one of charging power and direct power to the receptacle for transfer to the electronic device. The receptacle may be supported by the table surface.

The item support apparatus may include a number of receptacles, each of which is electrically coupled to the power supply circuitry to receive power received by the receiver, and each of which is configured to supply a different form of electrical power to an electronic device. The power supply circuitry may be configured to determine the appropriate form of electrical power to supply to each of the receptacles and transfer the appropriate form of electrical power from the power storage device to each of the receptacles. The receiver may include an inductive coil. The receiver may include a resonant magnetic coil.

The item support apparatus may include a powered actuator configured to adjust the position of the table surface relative to the base, wherein the actuator is powered by electrical power received by the receiver. The item support apparatus may include a receptacle supported by the table surface, wherein the power storage device is supported by the base and the receptacle is electrically coupled to the power storage device. The item support apparatus may include a light assembly supported by the table surface, wherein the light assembly is powered by electrical power received by the receiver. The item support apparatus may include a wireless data transmitter supported by the base, wherein the wireless data transmitter is powered by electrical power received by the receiver. The item support apparatus may include a receptacle configured to supply electrical power received by the receiver to an electronic entertainment device and power supply circuitry configured to route audio output from the electronic entertainment device to the wireless data transmitter for wireless transmission to a speaker. The item support apparatus may include an audio speaker supported by the table surface, wherein the audio speaker is powered by electrical power received by the receiver.

The item support apparatus may include a number of receptacles supported by the table surface, wherein each of the receptacles is configured to receive electrical power received by the receiver and stored in the power storage device, and a cover positionable over the receptacles. The base of the item support apparatus may include a leg, where the leg defines an interior region, and the receiver is located within the interior region of the leg.

The item support apparatus may include one or more of a lamp socket, a cigarette lighter electrical port, a Universal Serial Bus (USB) electrical port, a digital media player electrical port, and a portable electronic computing device charging port supported by the table surface.

According to another aspect of this disclosure, a wireless electrical power transfer system includes a person support apparatus configured to support a person in at least a horizontal position, the person support apparatus comprising a transmitter configured to transmit electrical power through a wireless medium during normal use of the person support apparatus, and an item support apparatus comprising a receiver configured to receive electrical power transmitted by the transmitter without physically contacting the transmitter or the person support apparatus and during normal use of the item support apparatus.

According to a further aspect of this disclosure, a method of wirelessly transferring electrical power to an electronic device includes receiving at an item support apparatus electrical power transmitted wirelessly by an electrical power transmitter located on a person support apparatus, storing the electrical power in a power storage device located at the item support apparatus, and supplying the electrical power to an electronic device at the item support apparatus.

The invention will now be further described by way of example with reference to the accompanying drawings, in which:

Fig. 1 is a perspective view of an item support apparatus, with elements of a wireless power transfer feature shown in phantom;

Fig. 2 is a perspective view of the item support apparatus of FIG. 1, positioned for use in connection with a person support apparatus, with a portion of the person support apparatus cut away to show elements of the wireless power transfer feature;

Fig. 3 is a partial perspective view of the item support apparatus of FIG. 1, showing support surfaces thereof and features provided therewith;

Fig. 4 is a block diagram of a wireless power transfer feature usable in connection with the item support apparatus of Fig. 1; and

Fig. 5 is a partial side view of the item support apparatus of Fig. 1, showing in relation thereto, a sectional view of a portion of a person support apparatus including a transmitter of the wireless power transfer feature.

The Figures show an illustrative embodiment of an item support apparatus (e.g. an overbed table) 10. The item support apparatus 10 includes a base 20, a support column 22, a support surface assembly 24, a side assembly 26, and a power supply system 50.

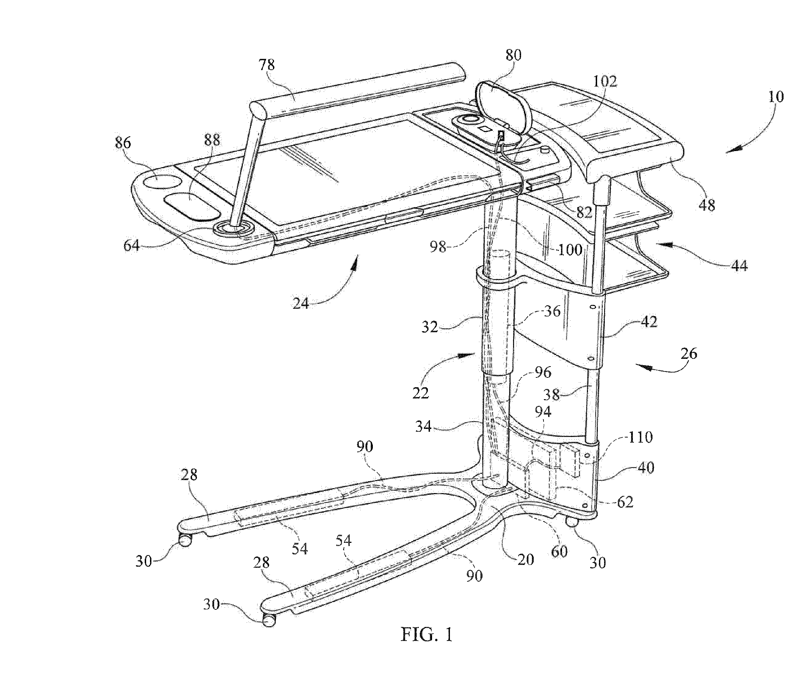

The base 20 is shaped to provide stability to the item support apparatus 10. For example, a U-shaped base having a pair of spaced-apart legs 28, as shown in Fig. 1, or an I-shaped base having a single leg, can be used. The base 20 is supported by a plurality of wheels or casters 30, which are typically located at its four extremities or corners to facilitate the convenient positioning of the item support apparatus 10. In the illustrated embodiment, the legs 28 are a molded piece defining an interior region in which components of the wireless power transfer feature are located, however, other suitable designs of the legs 28 may also be used. For example, each of the legs 28 may be a separate or a solid piece.

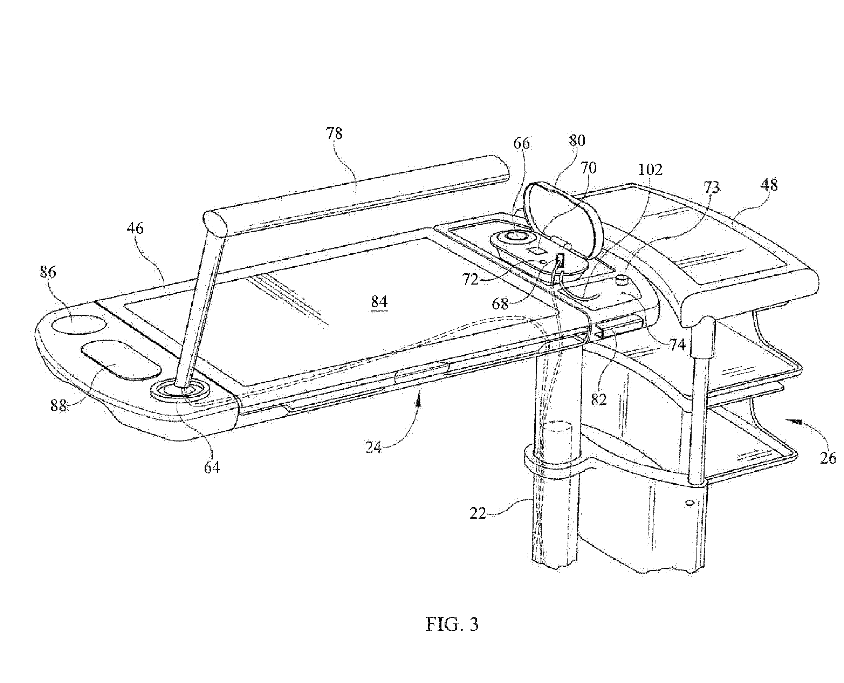

The support column 22 is supported by and extends vertically upwardly from the base 22. The support column 22 includes an upper section 32 and a lower section 34. One of the upper and lower sections 32, 34 is configured to move vertically relative to the other, so that the height of the support column 22 can be adjusted to facilitate the positioning of the support surface assembly 24 as may be needed for the convenience of a caregiver, a person using a person support apparatus, or otherwise. In the illustrated embodiment, each of the upper and lower sections 32, 34 includes a columnar or tubular structure that has a hollow interior region configured to house components of the wireless power transfer feature, as indicated by Figs. 1 and 3. In the illustrated embodiment, the lower section 34 is fixed to the base 20 and the upper section 32 slides relative to the lower section 34, in a telescoping fashion. However, other suitable designs may be used. For example, a non-telescoping configuration may be used.

In some embodiments, a mechanical lift mechanism may be used to adjust the height of the support column 22. In the illustrated embodiment, a powered lift mechanism 36 facilitates the raising and lowering of the height of the support column 22. The powered lift mechanism 36 is mounted in the interior region of the upper and/or lower sections 32, 34. The powered lift mechanism 36 includes an electronically driven actuator (such as a linear actuator) that is coupled to the upper and/or lower sections 32, 34 and configured to drive the vertical movement of one of the upper and lower sections 32, 34 relative to the other. In the illustrated embodiment, the powered lift mechanism 36 includes a rod, one end of which is coupled to the upper section 32, and the other end of which is coupled to a motor so that operation of the motor can cause the rod to extend or retract relative to the motor housing.

A mechanical lift mechanism is also provided, in the illustrated embodiment, so that the item support apparatus 10 can be released from the electronic control of the height of the support column 22. The mechanical lift mechanism is actuated by a handle 82, which disables the powered lift mechanism 36 and allows manual adjustment of the height of the support column 22 using existing techniques or those that are developed after the date of this disclosure.

The support surface assembly 24 is cantilevered from a top end of the support column 22. The support surface assembly 24 includes a table surface 84, which can be used as a food tray, work surface, or storage area, for example. The support surface assembly 24 also includes one or more non-electrical receptacles 86, 88, defined therein. The non-electrical receptacles 86, 88 may be specially sized or configured to store items such as drinking cups, tissues, and/or hand sanitizer, for example.

A light assembly 78 is also included in the illustrated support surface assembly 24. The light assembly 78 is configured to illuminate the table surface 84. The light assembly 78 includes one or more light emitting diodes (LEDs), in the illustrated embodiment, but any suitable source of light may be used in the light assembly 78.

The support surface assembly 24 further includes a number of electrical power receptacles 66, 68, 70, 72 defined therein. One or more of the receptacles 66, 68, 70, 72 may be configured to provide electrical power directly to an electronic device supported by the item support apparatus 10 or to an electronically-powered feature of the item support apparatus 10. Alternatively or in addition, one or more of the receptacles 66, 68, 70, 72 may be configured to provide charging power to a power storage device (e.g. a rechargeable battery) of an electronic device, for the purpose of charging or recharging the power storage of the electronic device.

For example, in the illustrated embodiment, the receptacles 66, 68, 70, 72 are charging and/or direct power outlets, e.g., a car cigarette lighter port 66, a Universal Serial Bus (USB) port 68, a digital media (e.g. music or video) player port 70, and a portable computing device (e.g. laptop or netbook computer) port 72. The port 66 is configured to receive a car cigarette lighter adapter (or "car charger"), which can supply electrical power to one or more portable electronic devices, such as a Smartphone, personal digital assistant (PDA), digital media player, camera, game station, or the like, depending on the configuration of the adapter. Typical cigarette lighter ports require a 12-Volt direct current (DC).

The port 68 supports a USB connector to allow communication with one or more electronic devices, such as personal computers, smart phones, Pads, digital media players, cameras, game stations, and the like. The port 68 may include one or more of the available types of USB receptacles, including, for example, the standard 5-Volt USB receptacle, or a mini-USB, micro-USB, USB-A, or USB-B receptacle. The port 70 supports a digital media player connector, such as an mp3 connector plug or mini-plug (e.g. a TSR connector).

The port 72 supports a personal computer or computer peripheral (e.g. printer, scanner, monitor, TV, etc.) connector, including any one or more of the various types of non-USB connectors, such as fiber optic connectors (e.g. TOSLINK), video connectors (e.g. VGA, DVI, S-Video), audio and video connectors (e.g. RCA, HDMI, Display Port), data connectors (e.g. IEEE 1394, east), and network connectors (e.g. RJ11 phone connector, RJ45 Ethernet connector), for example.

Electronic devices can be connected to the receptacles 66, 68, 70, 72 using a suitable mating connector (e.g., as specified by the device manufacturer or applicable industry standards). If a device connected to a receptacle 66, 68, 70, 72 is in use, the receptacle 66, 68, 70, 72 may be used to provide direct electrical power to the connected device. If the connected device is not in use, or even if the connected device is in use, the receptacle 66, 68, 70, 72 may be used to provide charging power to the rechargeable power storage of the connected device.

The number of power receptacles provided in connection with the support surface assembly 24 is limited only by the space and design constraints of the item support apparatus 10. It will be appreciated that other types or configurations of power receptacles (e.g. brand-specific or otherwise) may be used alternatively or in addition to those mentioned herein. Moreover, one or more of such receptacles may be located elsewhere on the item support apparatus 10, including any suitable location on the side assembly 26.

A cover 80 is shown in a raised position, in which the receptacles 66, 68, 70, 72 are accessible for use. The cover 80 can be lowered and placed over the receptacles 66, 68, 70, 72 when the receptacles 66, 68, 70, 72 are not in use, for protection against food, liquids, or other hazards, or for other reasons.

The support surface assembly 24 also includes an audio speaker or set of speakers 74, and a lamp socket 98, defined therein. The speakers 74 can be connected, using wiring or wirelessly, to an electronic media player such as digital movie or music player, handheld game system or other portable electronic entertainment device. In the illustrated embodiment, the speaker 74 is an integrated transducer speaker and includes a knob, dial, slide or similar mechanism 73, which is mounted to the support surface assembly 24 for volume control of the speaker output. The lamp socket 98 supports the light assembly 78 and provides electrical power directly thereto.

The side assembly 26 is supported by the base 20 and the support column 22. The side assembly 26 includes a pair of vertical posts 38 extending upwardly from the base 20 (the view of one of which is obstructed in the drawings). The posts 38, along or in combination with the support column 22, support a pair of panels 40, 42, a shelving or container assembly 44, and a table surface 48. Any one or more of the shelving or containers 44 or table surface 48 can be used for the storage of various items, such as papers, reading materials, portable electronic devices, medicines, health care equipment, and medical devices, for example.

In the illustrated embodiment, the panel 40 includes a molded piece that defines a hollow interior region in which the components 60, 62, 76 of the wireless power transfer feature are housed. As indicated by Fig. 1, some components of the wireless power transfer feature, or portions thereof, may also be located within the interior region of the support column 22. In other embodiments, some or all of the components of the wireless power transfer feature may be installed in a separate housing and/or supported by one or more exterior surfaces of the panel 40, the support column 22, or another portion of the item support apparatus 10 (e.g., via a mounting bracket).

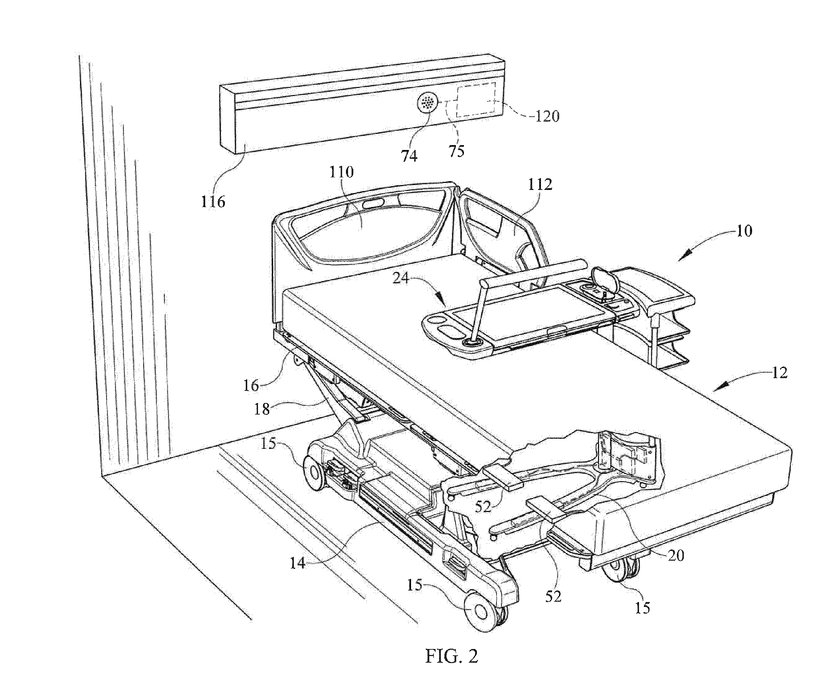

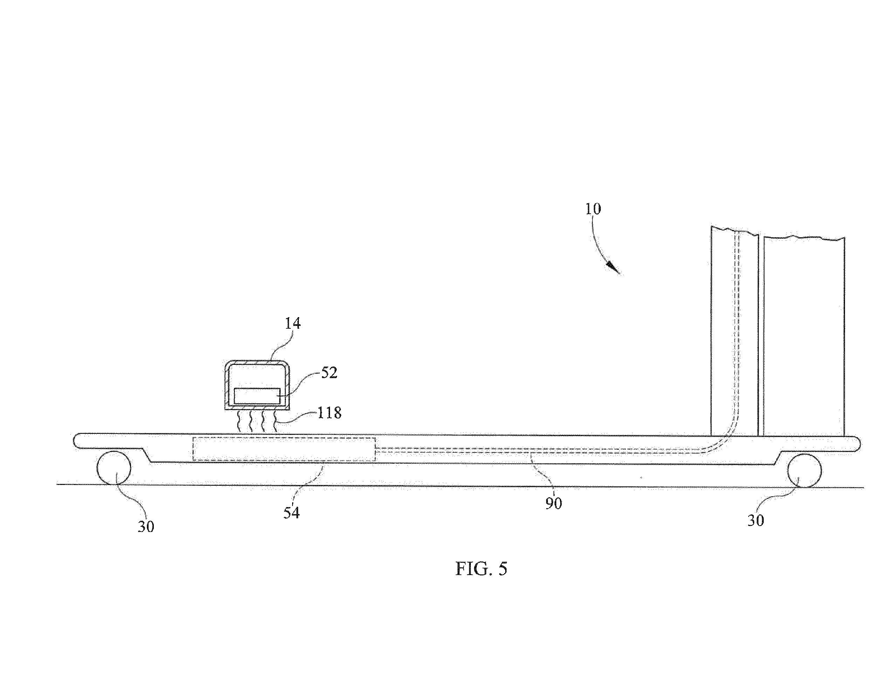

Referring to Figs. 2 and 5, the item support apparatus 10 can be used with a person support apparatus 12. While the illustrated person support apparatus 12 is a hospital bed, it will be appreciated that the item support apparatus 10 may be used in connection with other types of person support apparatuses, such as stretchers, patient chairs, wheelchairs, and the like. Also, for purposes of the wireless power transfer features described herein, the item support apparatus 10 may be used in connection with other devices, such as bed locators, support arms or columns, headwalls, medical headboards, and other similar devices that are capable of supporting wireless power transfer.

As shown, the person support apparatus 12 has a pair of longitudinal base members 14, which are supported by a plurality of wheels or casters 15. The base members 14 support a frame 16 and a plurality of supports (e.g. lift arms) 18 located between the base members 14 and the frame 16. The person support apparatus 12 may also include one or more endboards, such as a headboard 110, and one or more siderails 112. Also shown in Fig. 2 is a headwall 116, which may be mounted to a wall or other vertical support structure, in a patient room or other room in which the person support apparatus 12 may be used.

When the item support apparatus 10 is positioned as shown in Fig. 2, the base 20 of the item support apparatus 10 can be positioned adjacent to or underneath the base members 14 of the person support apparatus 12, and the height of the support surface assembly 24 can be adjusted above the frame 16. When not in use, the item support apparatus 10 can be stored away from the person support apparatus 12.

The wireless power transfer feature of the item support apparatus 10 includes a power supply system 50. The power supply system 50 includes one or more receivers 54, which are configured to receive electrical energy or power 118 wirelessly from a wireless transmitter 52, which is spaced from, adjacent to, or located remotely from the item support apparatus 10 (i.e., the transmitter 52 is not directly connected to the item support apparatus 10), as best shown in Fig. 5.

The wireless power receivers 54 are, in the illustrated embodiment, supported by the base 20 of the item support apparatus 10. More specifically, each receiver 54 is installed in an interior region defined by a leg 28 of the item support apparatus 10, in the illustrated embodiment. In other embodiments, the receiver or receivers 54 may be mounted to an exterior surface of the legs 28, or located elsewhere on the item support apparatus 10, or at another location. For example, the receiver or receivers 54 may be supported by the support column 22, the support surface assembly 24, or the side assembly 26, or may be located on an endboard 110, siderail 112, or headwall 116. It will be appreciated that the receiver or receivers 54 may be mounted or placed in any suitable location in which the wireless transfer of electrical energy or power from the transmitter 52 to the receiver or receivers 54 can take place and in which the electrical energy or power can be distributed by the power supply circuitry 60 to the various devices and applications powered thereby.

In the illustrated embodiment, the wireless transmitters 52 are located on the person support apparatus 12. More specifically, the transmitters 52 are mounted to one or both of the base members 14 and arranged so that a receiver 54 can be positioned within the transmitting range of a transmitter 52 to receive the electrical energy or power 118 transferred through a wireless medium. In some embodiments, the transmitters 52 are fixed (e.g. by bolts, adhesive, welding, or other fastening technique) to a bottom (i.e. downwardly facing) or side surface of the base member or members 14. In other embodiments, such as is shown in Fig. 5, the transmitters 52 are mounted within a hollow space or interior region defined by the base member 14.

In other embodiments, the transmitter or transmitters 52 may be located elsewhere on the person support apparatus 12, such as on or in an endboard 110 or a siderail 112, or at another location. For example, the transmitter or transmitters 52 may be supported by the frame 16, or located on a headwall 116 or a bed locator (not shown) coupled to the wall, or positioned on the floor or mounted to the ceiling of a patient room or other room in which the item support apparatus 10 may be located. It will be appreciated that the transmitter or transmitters 52 may be mounted or placed in any suitable location in which the wireless transfer of electrical energy or power from the transmitter 52 to the receiver or receivers 54 can take place.

The power supply system 50 provides electrical energy or power 118 to the item support apparatus 10 for use in powering, charging, or recharging the various electronic features and devices of the item support apparatus 10, and eliminates the need for the item support apparatus 10 to be connected by wiring to an electrical (e.g. wall) outlet. The electrical energy or power 118 received by the receivers 52 is stored at the item support apparatus 10 in a power storage device 62. The power storage device 62 is accessed by power supply circuitry 60, which distributes electrical power as needed for the various devices and/or applications connected at the item support apparatus 10, e.g. charging or recharging portable electronic devices, and/or providing direct power for operation of the overbed table lift mechanism 36, the light assembly 78, the speaker or speakers 74, and/or other electronic devices that may be connected to one or more of the receptacles 66, 68, 70, 72. As well, the power supply system 50 may, alternatively or in addition, provide electrical energy or power to other electronic devices that are supported by, adjacent to or in proximity to the item support apparatus 10.

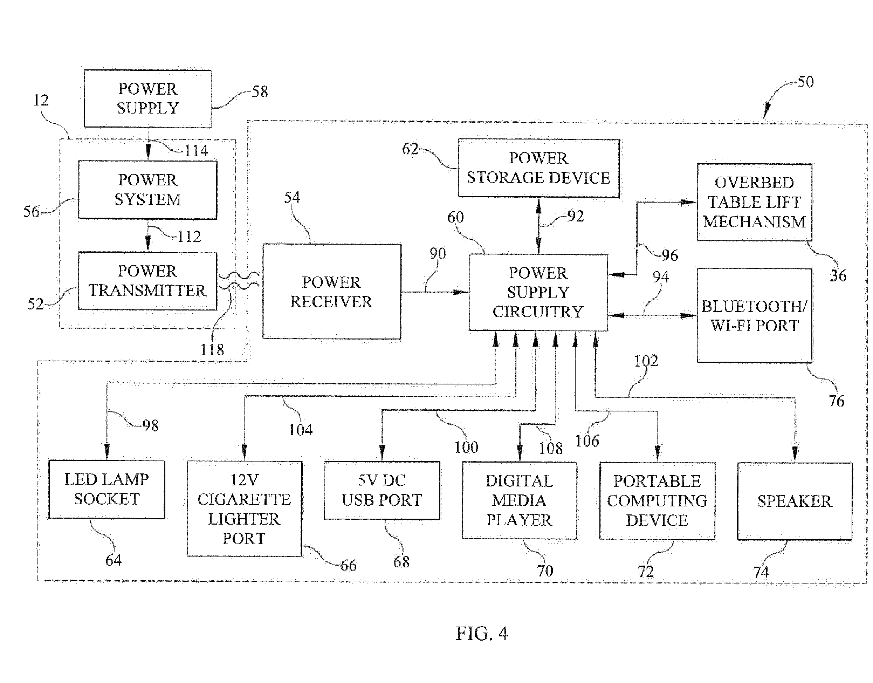

A block diagram of an illustrated embodiment of the power supply system 50 is shown in Fig. 4. As shown therein, the wireless power transmitter 52 is included with the person support apparatus 12 and receives electrical energy from an electrical power system 56 of the person support apparatus 12, via a signal path 112. Power is supplied to the power system 56 by an external power source 58, such as a hospital power generator or an external power network, via a signal path 114.

As noted above, the transmitter 52 transfers electrical energy or power 118 to the receiver 54 through a wireless medium, without any physical contact between the transmitter 52 and the receiver 54. For purposes of clarity, the energy transmitted by the transmitter 52 is electrical in nature (as opposed to solar energy or light energy, for example), in the form of a direct current (DC) or an alternating current (AC). The wireless transfer of electrical energy or power is accomplished using an existing technique, such as magnetic induction, magnetic coupling, or resonant magnetic coupling, for example, or any other suitable technique including any technique developed after the date of this disclosure. In some embodiments, a magnetic induction or resonant magnetic coupling may be desirable, since, as shown by Fig. 5, the transmitter 52 and receiver 54 can be completely hidden from view.

In embodiments where magnetic induction is used, the transmitter 52 includes an inductive coil made of a conductive material such as copper (not shown), which is located within a hollow interior region of the base member 14 (or other structure as noted above). The inductive coil is connected to the power system 56 to receive electrical energy or power in the form of an AC current. The receiver 54 includes another inductive coil, which is located within the base 20 (or other structure, as noted above). The inductive coils are arranged so that when the item support apparatus 10 is moved into a position in which the wireless transfer of electrical energy or power can occur (e.g., when the legs 28 are positioned underneath the person support apparatus 12), a contactless, wireless electrical field is created between the coils, i.e. without the coils or any part of the transmitter 52 and receiver 54 physically touching the other. The wireless activity field created between the inductive coils creates a wireless transfer of electrical energy (e.g. current) from the transmitter 52 to the receiver 54.

In embodiments where resonant magnetic coupling is used, both the transmitter 52 and the receiver 54 include a resonant magnetic coil, i.e. a coil having a varying or oscillating magnetic field. The coil of the transmitter 52 is connected to an AC power source. The coils are configured so that their natural frequencies are approximately the same. The matching of the natural resonant frequencies of the two coils causes a magnetic coupling to occur, which induces the transmission of an electric current from the transmitter 52 to the receiver 54 without any physical contact between the two devices.

The transmission range or distance between the transmitter 52 and the receiver 54 can be determined according to the requirements of a particular design of the item support apparatus 10 and/or the person support apparatus 12 and/or other considerations. In other words, the wireless energy transfer feature of this disclosure is not limited to short-distance wireless transfers of electrical energy. For example, one form of resonant magnetic coupling known as WiTricity (see www.witricity.com) may be used to wirelessly transfer electrical energy or power over large distances.

Once electrical energy is received by the receiver 54, the power supply circuitry 60 distributes it according to the requirements of the various ports, devices and applications 36, 62, 64, 66, 68, 70, 72, 74, 76, via one or more of the signal paths 90, 92, 94, 96, 98, 100, 102, 104, 106, 108. As such, the power supply circuitry 60 includes memory to store computer logic, parameters, and instructions, and a microprocessor configured to receive electrical inputs, apply computer logic, parameters and instructions thereto, and transmit electrical outputs to the various components of the power supply system 50 as needed to accomplish the transfer of electrical energy or power to the respective devices and applications connected thereto. For instance, computer logic of the power supply circuitry 60 may determine that, if there are no electronic devices connected to any of the receptacles 66, 68, 70, 72, and the lamp 78 is not turned on, and the powered lift mechanism 36, speaker 74, and Bluetooth/WIFI port 76 are not being used, then all of the electrical energy or power received by the receiver 54 is to be transferred to the power storage device 62.

In general, the power storage device 62 stores electrical energy or power received by the receiver 54 for later use. The power storage device 62 is typically a rechargeable battery, such as a Lithium-ion battery, or any other suitable battery or electrical energy storage device, according to the requirements of a given design. In some embodiments, it may be desirable to use a relatively lightweight storage device, to reduce the amount of weight added to the item support apparatus 10 by the power supply system 50, for example, or for other reasons.

The output of the power storage device 62 may be a DC or an AC current as needed by the various devices and applications that may be connected to the power supply system 50. For example, the power supply circuitry 60 may include an inverter to convert DC current to AC current.

Computer logic executed by the power supply circuitry 60 is configured to determine if an electronic device is connected to the power supply system 50 via one or more of the receptacles 66, 68, 70, 72, or if the lamp 78 is turned on, or if the powered lift mechanism 36, speaker 74, and/or Bluetooth/WIFI port 76 is being used. Upon determining which devices or applications are in need of electric current, the power supply circuitry 60 executes computer logic to determine the voltage and/or amperage requirements of each connected device or application, draws the required amount (e.g. steps up or steps down the voltage or amperage) from the power storage device 62, and routes it to the connected devices or applications via one or more of the signal paths 94, 96, 98, 100, 102, 104, 106, 108 as needed.

In this way, the power supply circuitry 60 is configured to regulate the electrical energy or power received wirelessly from the transmitter 52 and to transmit the required power to the various ports located on or supported by the item support apparatus 10 (or other structure, as noted above). Thus, the power supply circuitry 60 controls the receiving of power from the receiver 54, via the signal path 90, the charging of the power storage device 62, and the supplying of electrical energy or power by the power storage device 62 to the various output ports, e.g. 36, 64, 66, 68, 70, 72, 74, 76.

In the illustrated embodiment, a wireless data transmitter (such as a Bluetooth or WIFI transmitter) 110 is supported by the item support apparatus 10 as shown in Fig. 1 and connected to the Bluetooth/WIFI port 76 of the power supply system 50. The transmitter 110 is configured for wireless data transmission from the item support apparatus 10 to a compatible wireless receiver. In some embodiments, a Bluetooth implementation may be desirable, e.g. for close proximity wireless data communications, while in other embodiments, a WIFI implementation may be preferred, e.g. for longer range wireless communications. For example, if a digital music player is connected to the port 70 of the item support apparatus 10, the audio output may be amplified and broadcast through speakers connected to the port 74 (e.g. via a wired connection 102), or the audio output may be transmitted wirelessly by the transmitter 110 to a compatible wireless receiver, such as a Bluetooth receiver 120, which, in the illustrated embodiment, is located in the headwall 120. The receiver 120 then transmits the audio output to an amplifier/speaker 74, which is mounted to the headwall 120, via a signal path 75. In other embodiments, the receiver 120, amplifier/speaker 74 and signal path 75 may be located in an endboard 110, a siderail 112, or any other suitable location within the transmission range of the transmitter 110.

In this embodiment, a switch may be mounted to the item support apparatus 10 and connected to the power supply circuitry 60, such that when the switch is activated, the power supply circuitry 60 routes audio output from the port 70 to the port 76 instead of to the speaker 74. In other embodiments, the power supply circuitry 60 may be configured to determine without user input when the transmitter 110 is within range of a receiver 120 and if so, route the audio signals to the receiver 120 rather than the speaker 74.

Also, in other embodiments, the Bluetooth/WIFI port 76 and transmitter 110 may be used for other wireless communications, alternatively or in addition to audio signals. For example, the port 76 and transmitter 110 may be used for the transmission of data or instructions from a computing device connected to one of the ports 66, 68, 72 to the receiver 120, which may be connected to a remote computing device or computer system, such as a nurse call system, patient or bed monitoring system, electronic medical records system, or the like, rather than a speaker.

Further, a wireless (e.g. Bluetooth or WIFI) receiver (e.g. 120) or transceiver may be connected to the port 76 and supported by the item support apparatus 10 (rather than the transmitter 110), and configured to receive or exchange wireless data and/or instruction communications with remote electronic devices. In these embodiments, the power supply circuitry 60 may be configured to route or output received communications to a device that is connected to one of the ports 66, 68, 70, 72, 74.

It will be appreciated that any of the signal paths 75, 90, 92, 94, 96, 98, 100, 102, 104, 106, 108, 112, 114 may include wired (e.g. insulated wiring) or wireless connections or a combination thereof, and/or may be connected to an electronic network, such as an Ethernet network. Also, in general, each of the representative signal paths 75, 90, 92, 94, 96, 98, 100, 102, 104, 106, 108, 112, 114 may include one or more unidirectional or bidirectional signal paths therein as may be needed to accomplish the sending and/or receiving of electrical energy or power, signals, data and/or instructions, between or among the various components of the power supply system 50.

While embodiments of the disclosure have been illustrated and described in detail in the drawings and foregoing description, the same are to be considered as illustrative and not intended to be exhaustive or to limit the disclosure to the precise forms disclosed. For example, while the illustrated embodiment supplies electrical power to an item support apparatus 10 through a wireless medium, it will be understood that the electronic features of the item support apparatus 10 may be powered by a wired connection (e.g., the transmitter 52 and receiver 54 may be replaced by a wired connection, such as an AC plug). Additional alternatives, modifications and variations may be apparent to those skilled in the art.

Also, while multiple inventive aspects and principles may be presented, they need not be utilized in combination, and various combinations of inventive aspects and principles are possible in light of the various embodiments provided above.

Embodiments of the invention can be described with reference to the following numbered clauses, with preferred features laid out in the dependent clauses:

Clause 1. An item support apparatus comprising a base, a support column extending upwardly from the base, a table surface cantilevered from the support column, a receiver configured to receive electrical power transmitted through a wireless medium by a transmitter that is not in physical contact with the receiver, and a power storage device configured to store electrical power received by the receiver.

Clause 2. The item support apparatus of clause 1, comprising power supply circuitry configured to transfer electrical power received by the receiver to the power storage device.

Clause 3. The item support apparatus of clause 2, comprising a receptacle electrically coupled to the power supply circuitry and configured to supply electrical power to an electronic device connected to the receptacle.

Clause 4. The item support apparatus of clause 3, wherein the power supply circuitry is configured to selectively supply at least one of charging power and direct power to the receptacle for transfer to the electronic device.

Clause 5. The item support apparatus of clause 3, wherein the receptacle is supported by the table surface.

Clause 6. The item support apparatus of clause 2, comprising a plurality of receptacles, each of which is electrically coupled to the power supply circuitry to receive power received by the receiver, and each of which is configured to supply a different form of electrical power to an electronic device.

Clause 7. The item support apparatus of clause 6, wherein the power supply circuitry is configured to determine the appropriate form of electrical power to supply to each of the receptacles and transfer the appropriate form of electrical power from the power storage device to each of the receptacles.

Clause 8. The item support apparatus of any preceding clause, wherein the receiver comprises an inductive coil.

Clause 9. The item support apparatus of any preceding clause, wherein the receiver comprises a resonant magnetic coil.

Clause 10. The item support apparatus of any preceding clause, comprising a powered actuator configured to adjust the position of the table surface relative to the base, wherein the actuator is powered by electrical power received by the receiver.

Clause 11. The item support apparatus of any preceding clause, comprising a receptacle supported by the table surface, wherein the power storage device is supported by the base and the receptacle is electrically coupled to the power storage device.

Clause 12. The item support apparatus of any preceding clause, comprising a light assembly supported by the table surface, wherein the light assembly is powered by electrical power received by the receiver.

Clause 13. The item support apparatus of any preceding clause, comprising a wireless data transmitter supported by the base, wherein the wireless data transmitter is powered by electrical power received by the receiver.

Clause 14. The item support apparatus of clause 13, comprising a receptacle configured to supply electrical power received by the receiver to an electronic entertainment device and power supply circuitry configured to route audio output from the electronic entertainment device to the wireless data transmitter for wireless transmission to a speaker.

Clause 15. The item support apparatus of clause 1, comprising an audio speaker supported by the table surface, wherein the audio speaker is powered by electrical power received by the receiver.

Clause 16. The item support apparatus of clause 1, comprising a plurality of receptacles supported by the table surface, wherein each of the receptacles is configured to receive electrical power received by the receiver and stored in the power storage device, and a cover positionable over the receptacles.

Clause 17. The item support apparatus of clause 1, wherein the base comprises a leg, the leg defines an interior region, and the receiver is located within the interior region of the leg.

Clause 18. The item support apparatus of clause 1, comprising at least one of a lamp socket, a cigarette lighter electrical port, a Universal Serial Bus (USB) electrical port, a digital media player electrical port, and a portable electronic computing device charging port supported by the table surface.

Clause 19. The item support apparatus of any preceding clause, comprising at least one of an audio speaker supported by the table surface, wherein the audio speaker is powered by electrical power received by the receiver; a plurality of receptacles supported by the table surface, wherein each of the receptacles is configured to receive electrical power received by the receiver and stored in the power storage device; a cover positionable over the receptacles; a leg coupled to the base, wherein the leg defines an interior region and the receiver is located within the interior region of the leg; a lamp socket, a cigarette lighter electrical port, a Universal Serial Bus (USB) electrical port, a digital media player electrical port, and a portable electronic computing device charging port supported by the table surface.

Clause 20. A wireless electrical power transfer system, comprising: a person support apparatus configured to support a person in at least a horizontal position, the person support apparatus comprising a transmitter configured to transmit electrical power through a wireless medium during normal use of the person support apparatus, and an item support apparatus comprising a receiver configured to receive electrical power transmitted by the transmitter without physically contacting the transmitter or the person support apparatus and during normal use of the item support apparatus.

Clause 21. A method of wirelessly transferring electrical power to an electronic device, comprising: receiving at an item support apparatus electrical power transmitted wirelessly by an electrical power transmitter located on a person support apparatus, storing the electrical power in a power storage device located at the item support apparatus, and supplying the electrical power to an electronic device at the item support apparatus.

## Claims

1. An item support apparatus, comprising:
a base,
a support column extending upwardly from the base,
a table surface cantilevered from the support column,
a receiver configured to receive electrical power transmitted through a wireless medium by a transmitter that is not in physical contact with the receiver, and
a power storage device configured to store electrical power received by the receiver.

2. The item support apparatus of claim 1, comprising power supply circuitry configured to transfer electrical power received by the receiver to the power storage device.

3. The item support apparatus of claim 2, comprising a receptacle electrically coupled to the power supply circuitry and configured to supply electrical power to an electronic device connected to the receptacle.

4. The item support apparatus of claim 3, wherein the power supply circuitry is configured to selectively supply at least one of charging power and direct power to the receptacle for transfer to the electronic device.

5. The item support apparatus of either claim 3 or claim 4, wherein the receptacle is supported by the table surface.

6. The item support apparatus of claim 2, comprising a plurality of receptacles, each of which is electrically coupled to the power supply circuitry to receive power received by the receiver, and each of which is configured to supply a different form of electrical power to an electronic device.

7. The item support apparatus of claim 6, wherein the power supply circuitry is configured to determine the appropriate form of electrical power to supply to each of the receptacles and transfer the appropriate form of electrical power from the power storage device to each of the receptacles.

8. The item support apparatus of any preceding claim, comprising a receptacle supported by the table surface, wherein the power storage device is supported by the base and the receptacle is electrically coupled to the power storage device.

9. The item support apparatus of any preceding claim, comprising a wireless data transmitter supported by the base, wherein the wireless data transmitter is powered by electrical power received by the receiver.

10. The item support apparatus of claim 9, comprising a receptacle configured to supply electrical power received by the receiver to an electronic entertainment device and power supply circuitry configured to route audio output from the electronic entertainment device to the wireless data transmitter for wireless transmission to a speaker.

11. The item support apparatus of any preceding claim, comprising at least one of an audio speaker supported by the table surface, wherein the audio speaker is powered by electrical power received by the receiver; a plurality of receptacles supported by the table surface, wherein each of the receptacles is configured to receive electrical power received by the receiver and stored in the power storage device; a cover positionable over the receptacles; a leg coupled to the base, wherein the leg defines an interior region and the receiver is located within the interior region of the leg; a lamp socket, a cigarette lighter electrical port, a Universal Serial Bus (USB) electrical port, a digital media player electrical port, and a portable electronic computing device charging port supported by the table surface.

12. The item support apparatus of any preceding claim, wherein the receiver comprises an inductive coil.

13. The item support apparatus of any preceding claim, wherein the receiver comprises a resonant magnetic coil.

14. The item support apparatus of any preceding claim, comprising a powered actuator configured to adjust the position of the table surface relative to the base, wherein the actuator is powered by electrical power received by the receiver.

15. The item support apparatus of any preceding claim, comprising a light assembly supported by the table surface, wherein the light assembly is powered by electrical power received by the receiver.
